Europäisches Patentamt

European Patent Office

Office européen des brevets

(19)

(11) **EP 0 973 702 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.[7]: **C04B 35/593**

(21) Anmeldenummer: **98921402.8**

(22) Anmeldetag: **27.03.1998**

(86) Internationale Anmeldenummer:
**PCT/EP98/01816**

(87) Internationale Veröffentlichungsnummer:
**WO 98/045226 (15.10.1998 Gazette 1998/41)**

(54) **GESINTERTES SILICIUMNITRID, BAUTEILE DARAUS, INSBESONDERE VENTILE, VERFAHREN ZU DEREN HERSTELLUNG UND DEREN VERWENDUNG**

SINTERED SILICON NITRIDE, COMPONENTS MADE THEREWITH, SPECIALLY VALVES, METHODS FOR THE PRODUCTION AND USE THEREOF

NITRURE DE SILICIUM FRITTE, ELEMENTS CONSTITUTIFS PRODUITS AVEC, NOTAMMENT SOUPAPES, PROCEDES PERMETTANT DE LES PRODUIRE ET LEUR UTILISATION

(84) Benannte Vertragsstaaten:
**AT BE CH DE DK ES FI FR GB GR IE IT LI LU MC NL PT SE**

(30) Priorität: **09.04.1997 DE 19714708**

(43) Veröffentlichungstag der Anmeldung:
**26.01.2000 Patentblatt 2000/04**

(73) Patentinhaber: **BAYER AG**
**51368 Leverkusen (DE)**

(72) Erfinder:
• **WÖTTING, Gerhard**
  **D-96450 Coburg (DE)**

• **GUGEL, Ernst**
  **D-96472 Rödental (DE)**
• **LINDNER, Hans, Andreas**
  **D-96472 Rödental (DE)**
• **WODITSCH, Peter**
  **D-47800 Krefeld (DE)**

(56) Entgegenhaltungen:
**EP-A- 0 753 492          WO-A-94/24066**

• **T. OGASAWARA ET AL.: "Fracture toughness and subcritical crack growth of small crack in silicon nitride at room temperature" JOURNAL OF THE CERAMIC SOCIETY OF JAPAN, Bd. 103, 1995, Seiten 1052-1057, XP002072478**

**Beschreibung**

Die vorliegende Erfindung betrifft gesintertes Siliciumnitrid ($Si_3N_4$), Bauteile daraus, insbesondere Ventile, Verfahren zu deren Herstellung und deren Verwendung.

Werkstoffe aus $Si_3N_4$ haben sich in vielen Anwendungen bewährt. Bauteile aus $Si_3N_4$ weisen jedoch nach wie vor Unzulänglichkeiten wie mangelnde Zuverlässigkeit im Dauereinsatz auf, die einem breiten Einsatz von $Si_3N_4$-Bauteilen in den genannten Anwendungen, die ökonomisch und ökologisch von Vorteil wären, entgegenstehen. So wird in DE-A 4312251 zwar ein hochfester $Si_3N_4$-Werkstoff mit einer definierten Ausfallwahrscheinlichkeit beansprucht, es wird aber keine Lehre zum Handeln mitgeteilt, wie diese Ausfallwahrscheinlichkeiten zu erreichen sind. Diese werden lediglich aus klassischen Biegefestigkeitsbestimmungen und deren statistischer Auswertung abgeleitet. Chlorhaltige Sinterkörper aus $Si_3N_4$ mit geringerer Biegefestigkeit sind aus EP-A-753 492 bekannt.

Die Zuverlässigkeit keramischer Werkstoffe wird von der Kurzzeitfestigkeit mit ihrer Streubreite und vom Langzeitverhalten unter Belastung bestimmt.

Die Kurzzeitfestigkeit folgt dabei der Griffith-Beziehung:

$$\sigma = \frac{K_{Ic}}{\sqrt{c}\ Y} \qquad (1)$$

mit:

$\sigma$      Festigkeit in MPa

$K_{Ic}$      Bruchzähigkeit in MPa·m$^{1/2}$

c      kritische Rißlänge in µm und

Y      Formfaktor, der die Form des kritischen Risses beschreibt.

Nach dieser Beziehung ist die Festigkeit direkt von der Riß- bzw. Defektlänge im Werkstoff abhängig.

Die für die Zuverlässigkeit wichtige Streuung der Kurzzeitfestigkeit wird durch die Weibull-Statistik beschrieben und ist durch den Weibull-Modul gemäß DIN 51110 gekennzeichnet.

Bei Belastung unterhalb der zum katastrophalen Bruch führenden Spannung gilt dagegen das "v-k"-Konzept

$$v = A \cdot K_I^{\,n} \qquad (2)$$

mit

v      Rißwachstumsgeschwindigkeit in m/s,

$K_I$      Spannungsintensitätsfaktor in MPa·m$^{1/2}$ bei Beanspruchungsart I = Zugspannung und

A,n      Parameter für unterkritisches Rißwachstum (Lebensdauer).

Dieses Konzept ist für Werkstoffe und Bauteile zutreffend, die mit wechselnden Spannungen unterhalb der durch die Griffith-Beziehung beschriebenen maximalen, sofort zum Versagen führenden Spannung beaufschlagt werden und ist somit für keramische Werkstoffe und Bauteile für eine Vielzahl technischer Anwendungen, z.B. für Ventile in Hubkolbenmotoren, relevant.

Der Rißwachstumskennwert wird gemäß der Beschreibung der Vornorm: ENV 843-3 dadurch bestimmt, daß Biegefestigkeiten mit unterschiedlichen Belastungsgeschwindigkeiten bestimmt werden.

Die Bestimmung der Biegefestigkeit ist in DIN 51 110 beschrieben. Die hierbei angewandte Belastungsgeschwindigkeit, die in 5 bis 10 s zum Bruch führen soll, beträgt üblicherweise ca. 100 MPa/s. Die hierbei bestimmte Biegefestigkeit wird als Kurzzeitoder Inertfestigkeit $\sigma_c$ bezeichnet.

Zur Ermittlung des Rißwachstumsparameter wird diese Messung bei reduzierten Belastungsgeschwindigkeiten vorgenommen. Hierbei haben die vorhandenen Risse die Möglichkeit zu wachsen, wodurch der Bruch bei geringeren Belastungen eintritt, d.h. es tritt ein sogenanntes unterkritisches Rißwachstum auf. Trägt man die Bruchspannung über der Belastungsgeschwindigkeit in doppelt logarithmischem Maßstab auf und verbindet die Medianwerte der mehrfach für eine definierte Belastungsgeschwindigkeit ausgeführten Messung durch eine Ausgleichsgerade, so ergeben sich aus der Steigung der Geraden und dem Achsenabschnitt dieser Geraden die Rißwachstumskennwerte n und A. Typische keramische Werkstoffe weisen n-Werte von 30 bis 40 auf (siehe Kingery, Introduction to Ceramics, John Wiley & Sons, New York, 1976, Seite 804) und sind somit als unterkritisches Rißwachstum zeigend zu qualifizieren, so daß ihre Lebensdauer im praktischen Einsatz begrenzt ist.

Um den ständig steigenden Anforderungen, insbesondere der Automobilindustrie, gerecht zu werden, bestand ein Bedarf an $Si_3N_4$ -Werkstoffen und Bauteilen mit einer verbesserten Zuverlässigkeit.

Aufgabe der vorliegenden Erfindung war daher die Bereitstellung von gesintertem $Si_3N_4$ und von zuverlässigen Bauteilen, insbesondere Ventilen, auf $Si_3N_4$-Basis, die dieses Eigenschaftsprofil aufweisen und zudem einfach und damit kostengünstig herstellbar sind.

Überraschenderweise wurde gefunden, daß gesintertes $Si_3N_4$ mit einem bestimmten Chlorgehalt ein verbessertes unterkritisches Rißwachstumsverhalten bei gleichzeitig hoher Biegefestigkeit und hohem Weibull-Modul aufweist.

Gegenstand der Erfindung ist daher gesintertes $Si_3N_4$, das einen Chlorgehalt von 100 bis 500 ppm, einen Kennwert n des unterkritischen Rißwachstums von ≥50, vorzugsweise ≥60, einer mittleren Biegefestigkeit bei Raumtemperatur von ≥850 MPa und einen Weibull-Modul von ≥18, aufweist.

Der Chlorgehalt des gesinterten $Si_3N_4$ wurde dabei durch Druckaufschluß mit Flußsäure bei Temperaturen zwischen 100 und 120°C und anschließender potentiometrischer Titration des Chlorids mittels Silbernitrat bestimmt.

Das erfindungsgemäße gesinterte $Si_3N_4$ enthält vorzugsweise Erdalkalien, $Sc_2O_3$, $Y_2O_3$, Seltene Erdoxide, $TiO_2$, $ZrO_2$, $HfO_2$, $B_2O_3$ und/oder $Al_2O_3$ als Sinteradditive, wobei diese im gesinterten Material eine Sekundärphasenkonzentration von 7,5 bis 20 Vol.-% neben kristallinem $Si_3N_4$ und/oder $Si_3N_4$-Mischkristallen ausbilden.

Diese Sekundärphasenkonzentration wird bestimmt, indem der Gesamtsauerstoffgehalt des gesinterten $Si_3N_4$ durch Heißextraktion ermittelt wird. Von diesem Ergebnis wird die bekannte Sauerstoffkonzentration, die durch zugesetzte Sinterhilfsmittel eingebracht wurde, subtrahiert. Die Differenz stellt den Sauerstoffgehalt von $Si_3N_4$ nach der Aufbereitung dar, der in Form von $SiO_2$ vorliegend angenommen wird. Diese $SiO_2$-Konzentration wird zu der Sinterhilfsmittelkonzentration addiert, was den Gesamtanteil oxidischer Bestandteile neben $Si_3N_4$ darstellt.

Für den $Si_3N_4$-Anteil des Werkstoffes wird dessen Reindichte von 3,18 g/cm$^3$ zur Berechnung des Volumenteils verwendet, für die Sekundärphasen, die sich aus der Reaktion der Sinteradditive mit dem $SiO_2$ des $Si_3N_4$-Pulvers beim Sintern bildet, wird die Reindichte $\rho_R$ gemäß

$$\rho_R = \text{G-ges} / \sum_{i=1}^{i=n} (G_i / \rho_{Ri}) \quad \text{in g/cm}^3 \tag{3}$$

errechnet, mit

G-ges = Gesamtgewicht der oxidischen Bestandteile in g

$G_i$ = Gewichte der einzelnen oxidischen Bestandteile in g

$\rho_{Ri}$ = Reindichten der einzelnen oxidischen Bestandteile in g/cm$^3$.

Damit werden die Volumenanteile an $Si_3N_4$ und Sekundärphase bestimmt, wobei letztere für den erfindungsgemäßen Werkstoff zwischen 7,5 und 20 Vol% liegt.

Das erfindungsgemäße $Si_3N_4$ zeichnet sich durch einen hohen Verdichtungsgrad (geringe Porosität) aus, so daß sich z.B. bei einer Nachsinterung bei einer bis zu 50°C höheren Temperatur als der Sintertemperatur weder die Dichte noch der Elastizitätsmodul des Werkstoffes ändert.

Gegenstand der Erfindung ist zudem ein Verfahren zur Herstellung des erfindungsgemäßen gesinterten $Si_3N_4$, wonach $Si_3N_4$-Pulver, welches entweder Chlor in einer Menge von 500 bis 1500 ppm enthält oder alternativ dazu gemeinsam mit einem Metallchlorid eingesetzt wird, zusammen mit mindestens einem Sinteradditiv in Wasser dispergiert, mit organischen Prozeßhilfsmitteln versetzt, der wäßrige Schlicker auf eine Feinheit von 90 % <1 μm gemahlen,

und anschließend so getrocknet wird, vorzugsweise durch Sprühtrocknung oder Wirbelschichttrocknung, daß das $Si_3N_4$ - Granulat einen Feuchtegehalt zwischen 1,0 und 4 Gew.-%, vorzugsweise zwischen 1 und 3 Gew.-%, und eine mittlere Granulatgröße von 40 bis 80 μm aufweist, und dieses anschließend gepresst, und nach dem Ausheizen der organischen Prozeßhilfsmittel unter einem $N_2$-Druck von $1 \leq p \leq 10$ bar gesintert wird.

Das Pressen erfolgt vorzugsweise axial und/oder isostatisch.

In einer bevorzugten Ausführungsform der Erfindung wird das Pressen bei Drucken < 2500 bar, das Ausheizen der organischen Prozeßhilfsmittel und der Feuchte in Luft, Schutzgas oder Vakuum bei $T \leq 650°C$ und die Sinterung unter einem $N_2$-Druck von $1 \leq p \leq 10$ bar bei $T \leq 2000°C$ durchgeführt.

Vorzugsweise weist das eingesetzte $Si_3N_4$ - Pulver einen Cl-Gehalt von 500 bis 1500 ppm auf und führt im gesinterten $Si_3N_4$ zu einem Cl-Gehalt von 100 bis 500 ppm.

Als $Si_3N_4$-Pulver kann z.B. das Baysinid® ST, erhältlich bei der Bayer AG, Deutschland, eingesetzt werden. Für den Fall, daß der Chlorgehalt des $Si_3N_4$-Pulvers zu gering ist, können zusätzlich Metallchloride, wie z.B. $MgCl_2$ oder $BaCl_2$ zugesetzt werden.

Sinteradditive, die in dem erfindungsgemäßen Verfahren einsetzbar sind, sind vorzugsweise Erdalkalien, $Sc_2O_3$, $Y_2O_3$, Seltene Erdoxide, $TiO_2$, $ZrO_2$, $HfD_2$, $B_2O_3$ und/oder $Al_2O_3$.

Diese werden vorzugsweise in solchen Mengen zugesetzt, daß sich während des Sinterns durch Reaktion mit dem Sauerstoff der in $Si_3N_4$- Pulvern immer vorhanden ist, und der als $SiO_2$ angenommen wird, eine flüssige Phase bildet, die im gesinterten Material als überwiegend glasartige Sekundärphase in einer Konzentration von 7,5 - 20 Vol% vorliegt.

Organische Prozeßhilfsmittel, die in dem erfindungsgemäßen Verfahren einsetzbar sind, sind vorzugsweise Dispergierhilfsmittel und/oder Preßhilfsmittel, wobei letztere die Funktion Binden und Plastifizieren umfassen.

Die Dispergierhilfsmittel sind vorzugsweise Citronen- und Polyacrylsäurederivate sowie Aminoalkohole in Konzentrationen von 0,1-2,5 Gew%, bezogen auf den Feststoffgehalt des Schlickers.

Als Preßhilfsmittel können eine Vielzahl von Substanzen, wie z.B. Polyurethan-Dispersionen, Cellulosederivate, Stärke und Polysaccharide, Polyamidlösungen, Polyvinylalkohol und -acetat, Polyethylenglykole und/oder Stearate eingesetzt werden. Diese werden vorzugsweise in Mengen von 0,2-5 Gew% eingesetzt.

Das Pressen bei < 2500 bar kann durch axiales und/oder isostatischen Trockenpressen, z.B in einer dem Bauteil entsprechenden Form, erfolgen.

Die auf diese Weise erhaltenen Materialien weisen keine Granulatrelikte im Werkstoffgefüge auf. Deshalb werden reproduzierbare Festigkeiten über 850 MPa bei Weibull-Moduli $\geq 18$ erreicht.

Ein weiterer Gegenstand der Erfindung sind Bauteile, insbesondere Ventile, aus dem erfindungsgemäßen $Si_3N_4$.

Ein weiterer Gegenstand der vorliegenden Erfindung sind zudem Ventile mit einer Ausfallwahrscheinlichkeit kleiner $10^{-6}$ aus dem erfindungsgemäßen gesinterten $Si_3N_4$.

Ein Gegenstand der Erfindung ist zudem ein Verfahren zur Herstellung der erfindungsgemäßen Ventile, wonach die Ventile mittels Schwingungsanalyse durch eine Frequenzaufspaltung von Resonanzfrequenzpeaks $\geq 0,0125$ % selektiert werden.

Die anderen Verfahrensschritte sind analog zu dem erfindungsgemäßen Verfahren zur Herstellung von $Si_3N_4$, wobei das Pressen in einer dem herzustellenden Ventil entsprechenden Form durchgeführt wird.

Es wurde nun gefunden, daß mit dem letztgenannten Verfahren, unabhängig von der geometrischen Form des Ventils, fehlerhafte Bauteile durch eine Frequenzaufspaltung von Resonanzfrequenzpeaks schnell und eindeutig detektiert werden können.

Diese Art der Selektion ist jedoch auch für Bauteile mit einer anderen geometrischen Form möglich.

Bei dem erfindungsgemäßen Verfahren wird das zu prüfende Ventil tellerseitig so auf drei elektrodynamische Wandler, einem Sender und zwei Empfängern gestellt, daß das Ventil etwa 1-2 mm vom Tellerrand entfernt in einem Winkelabstand der Sensoren von jeweils 120° unterstützt ist. Durch eine Frequenzvariation im Bereich von 0,1 bis 2 MHz des Senders werden im Keramikventil die Schaftbiegeschwingung und die Tellerplatten-Biegeschwingung angeregt und mit den beiden Schwingungsempfängern aufgenommen.

Makroskopische Defekte, wie Risse, Einschlüsse werkstofffremder Bestandteile oder Inhomogenitäten bezüglich der Dichte und/oder des Elastizitätsmoduls äußern sich in einer eindeutig zuzuordnenden Resonanzfrequenzaufspaltung in 2 Teil- Eigenschwingungen, wobei die Frequenzaufspaltung mit zunehmender Größe des Fehlers zunimmt.

Ein weiterer Gegenstand der Erfindung ist die Verwendung des erfindungsgemäßen $Si_3N_4$ und daraus hergestellter Bauteile im Motorenbau, insbesondere als Ventil in Hubkolbenmotoren, im allgemeinen Maschinenbau, der Lagerungstechnik und im Gerätebau.

Daraus hergestellte Motorenteile zeichnen sich vor allem durch Langlebigkeit und große Zuverlässigkeit aus. So zeigten $Si_3N_4$-Motorventile auf Testständen, die weit über den in normalen Hubkolbenmotoren herrschenden Bedingungen betrieben wurden, eine ausgezeichnete Beständigkeit ohne Versagen.

**Beispiele**

Es wurden verschiedene Werkstoffzusammensetzungen unter Verwendung unterschiedlicher $Si_3N_4$-Ausgangspulver und Sinteradditive identisch hergestellt und charakterisiert. Als $Si_3N_4$-Pulver wurden das weitgehend chlorfreie LC12S (H.C. Starck, Deutschland) sowie das chlorhaltige Baysinid® ST (BAYER AG, Deutschland) eingesetzt. Diese Produkte weisen die folgenden typischen Eigenschaften auf:

| | LC12S | Baysinid®ST |
|---|---|---|
| Spezifische Oberfläche, $m^2/g$ | 20 | >10 |
| O-Gehalt, Gew.-% | 2,0 | 1,2-1,4 |
| C-Gehalt, Gew.-% | 0,2 | <0,05 |
| Fe-Gehalt, ppm: | 60 | <50 |
| Al-Gehalt, ppm: | 300 | <20 |
| Ca-Gehalt, ppm: | 30 | <20 |
| Cl-Gehalt, pm: | <100 | 700-1500 |
| Anteil $\alpha$,-$Si_3N_4$, % bezogen auf $\alpha$ und $\beta$ | ca. 95 | ca. 96 |

Als Sinteradditive wurden eingesetzt: $Y_2O_3$ (erhältlich unter dem Handelsnamen Grade C bei der Firma H.C. Starck, Deutschland) und $Al_2O_3$ (erhältlich unter dem Handelsnamen CT 3000 SG bei der Firma Alcoa, Deutschland) sowie MgO (erhältlich als MgO p.a. bei der Firma Merck, Deutschland). Die Rohstoffe wurden in vorgelegtes $H_2O$-p. a. eingebracht, dem ein Dispergierhilfsmittel (KV 5088 der Firma Zschimmer & Schwarz, Deutschland) zugefügt war und mittels Hochgeschwindigkeitsrührer dispergiert. Die Viskosität wurde auf 20 mPas eingestellt, was einem Feststoffgehalt um 64 % entsprach.

Die Ansätze wurden mit einer Rührwerkskugelmühle so lange gemahlen, bis sich bei der simultan ermittelten Teilchengrößenverteilung ein Kennwert von 90 % <1 $\mu$m ergab.

Anschließend wurde 1 % Bayceram® 4305 als Binde- und Plastifiziermittel, erhältlich bei der Bayer AG, Deutschland, zugegeben und noch 5 Minuten weitergemahlen.

Derart aufbereitete Schlicker wurden mittels Sprühtrockner granuliert, wobei die Bedingungen jeweils ansatzbezogen so eingestellt wurden, daß der Anteil an Granulat <150 $\mu$m möglichst gering war. Aus dem zu verarbeitenden Ansatz wurde Granulat >150 $\mu$m durch eine Siebung abgetrennt.

Aus diesem Granulat bei <2500 bar verpreßte Formkörper wurden bei Temperaturen bis maximal 650°C ausgeheizt und wie in DE-A 4 233 602 ohne Einbettung in Schutzpulver in Graphitbehältnissen bei 1 800°C ± 50°C in $N_2$-Atmosphäre gesintert.

Die Werkstoffeigenschaften sind in der nachfolgenden Tabelle aufgeführt. Die Biegefestigkeit und der Weibull-Modul wurden nach DIN 51 110 und die Parameter des unterkritischen Rißwachstums nach der europäischen Vornorm ENV 843-3 ermittelt.

In der nachfolgenden Tabelle wurdenfolgende Abkürzungen verwendet:
So entspricht "TGV-Ans." dem Anteil der Pulverteilchen in der Suspension nach der Mahlung, die kleiner 1 $\mu$m sind (% <1 $\mu$m). "GGV" der Granulatgrößenverteilung, gekennzeichnet durch den Mittelwert der Verteilung D50 in $\mu$m. Die Sinterdichte ist die nach dem Auftriebsverfahren in $H_2O$ bestimmte Dichte der gesinterten Körper, der "O-Gehalt" und "Cl-Gehalt" der nach der Sinterung in den gesinterten Körpern analysierte Gehalt an Sauerstoff (O) sowie Chlor (Cl). Aus dem O-Gehalt wurde, nach Abzug der bekannten Sauerstoffanteile, die durch die Sinterzusätze eingebracht wurden, der Sauerstoffanteil berechnet, der über das $Si_3N_4$-Pulver nach der Aufbereitung eingebracht wurde. Unter der Annahme, daß dieser als $SiO_2$ vorliegt, wurde durch Addition dieses berechneten $SiO_2$-Gehaltes des gesinterten Materials und der Konzentration der zugesetzten Sinteradditive die Gesamtkonzentration in Gewichtsprozent der oxidischen Bestandteile errechnet. Diese wird entsprechend den obigen Ausführungen in die Volumenanteile an Sekundärphase und kristallinem $Si_3N_4$ umgerechnet. In der Spalte "Sek.-pha." in der Tabelle ist die derart bestimmte wichtige Sekundärphasenkonzentration in Volumenprozent aufgeführt.

EP 0 973 702 B1

## Tabelle 2

Werkstoffvariationen zu Beispiel 1 und resultierende Werkstoffeigenschaften

| Ansatz Nr. | Ansatz-Zusammensetzung Gew.-% | TGV-Ans.% <1 µm | GGV D-50 µm | Sinterbed. T, °C/t, h/p-N2, bar | Sinter-dichte g/cm$^3$ | Sinterkörper | | | Biegefestig-keit MPa | Weibull-Modul | n-Wert | Erfindungs-gemäß ja/nein |
| | | | | | | O-Gehalt Gew.-% | Sek.-pha. Vol.% | Cl-Gehalt ppm | | | | |
|---|---|---|---|---|---|---|---|---|---|---|---|---|
| 0 | LC12s+5Y$_2$O$_3$+ 5Al$_2$O$_3$ | 91,0 | 75 | 1800/2/100 | 3,23 | 5,7 | 14,2 | 70 | 895 | 22 | 27 | nein |
| 1 | BST+5Y$_2$O$_3$+ 5Al$_2$O$_3$+1MgO | 92,0 | 75 | 1775/2/10 | 3,24 | 5,4 | 12,9 | 390 | 920 | 22 | 60 | ja |
| 2 | BST+8Y$_2$O$_3$+ 4Al$_2$O$_3$ | 91,5 | 80 | 1825/2,5/10 | 3,28 | 3,8 | 13,9 | 320 | 942 | 28 | 71 | ja |

Bei B-ST handelt es sich um Baysinid®ST

Aus diesen Beispielen ist die erfindungsgemäße Wirkung von Cl-Gehalte auf den Kennwert n des unterkritischen Rißwachstums klar ersichtlich

**Patentansprüche**

1. Gesintertes $Si_3N_4$, **dadurch gekennzeichnet, daß** dieses einen Chlorgehalt von 100 bis 500 ppm, einen Kennwert n des unterkritischen Rißwachstums von $\geq 50$, eine mittlere Biegefestigkeit bei Raumtemperatur von $\geq 850$ MPa und einen Weibull-Modul von $\geq 18$ aufweist.

2. Gesintertes $Si_3N_4$ nach Anspruch 1, **dadurch gekennzeichnet, daß** dieses Erdalkalien, $Sc_2O_3$, $Y_2O_3$, Seltene Erdoxide, $TiO_2$, $ZrO_2$, $HfO_2$, $B_2O_3$ und/oder $Al_2O_3$ als Sinteradditive enthält, wobei diese im gesinterten Material eine Sekundärphasenkonzentration von 7,5 bis 20 Vol.-% neben kristallinem $Si_3N_4$ und/oder $Si_3N_4$-Mischkristallen ausbilden.

3. Verfahren zur Herstellung von gesinterten $Si_3N_4$ nach Anspruch 1 oder 2, bei dem $Si_3N_4$-Pulver, welches entweder Chlor in einer Menge von 500 bis 1500 ppm enthält oder alternativ dazu gemeinsam mit einem Metallchlorid eingesetzt wird, zusammen mit mindestens einem Sinteradditiv in Wasser dispergiert, mit organischen Prozeßhilfsmitteln versetzt, der wäßrige Schlicker auf eine Feinheit von 90 % <1 μm gemahlen, und anschließend so getrocknet wird, daß das $Si_3N_4$- Granulat einen Feuchtegehalt zwischen 1 und 4 Gew.-% und eine mittlere Granulatgröße von 40 bis 80 μm aufweist, und dieses anschließend gepresst und nach dem Ausheizen der organischen Prozeßhilfsmittel unter einem $N_2$-Druck von $1 \leq p \leq 10$ bar gesintert wird.

4. Verfahren nach Anspruch 3, **dadurch gekennzeichnet, daß** das Pressen bei p < 2500 bar, das Ausheizen der organischen Prozeßhilfsmittel und der Feuchte in Luft, Schutzgas oder Vakuum bei T $\leq 650°$C und die Sinterung bei T $\leq 2000°$C durchgeführt wird.

5. Bauteile aus gesintertem $Si_3N_4$ nach Anspruch 1 oder 2.

6. Ventile mit einer Ausfallwahrscheinlichkeit kleiner $10^{-6}$ aus gesintertem $Si_3N_4$ nach Anspruch 1 oder 2.

7. Verfahren nach Anspruch 3 oder 4 zur Herstellung von Ventilen nach Anspruch 6, **dadurch gekennzeichnet, daß** die Ventile mittels Schwingungsanalyse durch eine Frequenzaufspaltung von Resonanzfrequenzpeaks $\geq 0,0125$ % selektiert werden.

8. Verwendung von gesintertem $Si_3N_4$ oder Bauteilen daraus nach Anspruch 1, 2 oder 5 im Motorenbau, Maschinenbau, der Lagerungstechnik und im Gerätebau.

**Claims**

1. Sintered $Si_3N_4$, **characterized in that** it has a chlorine content of 100 to 500 ppm, a subcritical crack growth parameter n $\geq 50$, a mean flexural strength at room temperature $\geq 850$ MPa and a Weibull modulus $\geq 18$.

2. Sintered $Si_3N_4$ according to Claim 1, **characterized in that** it contains alkaline earth metals, $Sc_2O_3$, $Y_2O_3$, rare earth oxides, $TiO_2$, $ZrO_2$, $HfO_2$, $B_2O_3$ and/or $Al_2O_3$ as sintering additives, these forming a secondary phase concentration in the sintered material of 7.5 to 20 vol.% in addition to crystalline $Si_3N_4$ and/or $Si_3N_4$ mixed crystals.

3. Process for preparing sintered $Si_3N_4$ according to Claim 1 or 2, in which $Si_3N_4$ powder, which either contains chlorine in an amount of 500 to 1500 ppm or, as an alternative to this, is used together with a metal chloride, is dispersed in water together with at lest one sintering additive, mixed with organic processing aids, the aqueous slip is ground to a fineness of 90% <1 μm, and subsequently dried so that the $Si_3N_4$ granules have a moisture content of between 1 and 4% by weight and an average granule size of 40 to 80 μm, and these are subsequently compressed and sintering is carried out after the organic process aids have been baked out under an $N_2$ pressure of $1 \leq p \leq 10$ bar.

4. Process according to Claim 3, **characterized in that** the compression is carried out at p < 2500 bar, the organic process aids and the moisture are baked out in air, inert gas or vacuum at T $\leq 650°$C and the sintering is carried out at T $\leq 2000°$C.

5. Components made of sintered $Si_3N_4$ according to Claim 1 or 2.

**6.** Valves having a failure probability of less than $10^{-6}$ made of sintered $Si_3N_4$ according to Claim 1 or 2.

**7.** Process according to Claim 3 or 4 for producing valves according to Claim 6, **characterized in that** the valves are selected using vibration analysis by frequency splitting of the resonant frequency peak $\geq 0.0125\%$

**8.** Use of sintered $Si_3N_4$ or components made thereof according to Claim 1, 2 or 5 in engine construction, mechanical engineering, storage technology and machine construction.

**Revendications**

**1.** $Si_3N_4$ fritté **caractérisé par** une teneur en chlore de 100 à 500 ppm, une caractéristique n de la croissance de fissure subcritique $\geq 50$, une résistance moyenne à la flexion à température ambiante $\geq 850$ MPa et un module de Weibull $\geq 18$.

**2.** $Si_3N_4$ fritté selon la revendication 1, **caractérisé en ce qu'**il contient en tant qu'additifs de frittage des métaux alcalino-terreux, $Sc_2O_3$, $Y_2O_3$, des oxydes des terres rares, $TiO_2$, $ZrO_2$ $HfO_2$, $B_2O_3$, et/ou $Al_2O_3$, ceux-ci formant dans le matériau fritté une phase secondaire à une concentration de 7,5 à 20 % en volume, accompagnant du $Si_3N_4$ cristallisé et/ou à l'état de cristaux mixtes.

**3.** Procédé pour la préparation du $Si_3N_4$ fritté selon les revendications 1 ou 2, dans lequel on part d'une poudre de $Si_3N_4$ qui contient du chlore en quantité de 500 à 1 500 ppm ou bien qu'on met en oeuvre avec un chlorure métallique, on la disperse dans l'eau avec au moins un additif de frittage, on ajoute des produits auxiliaires organiques de préparation, on broie la barbotine aqueuse à une finesse de 90 % < 1 μm, puis on sèche dans des conditions telles que les granules de $Si_3N_4$ aient une teneur en humidité de 1,0 à 4 % en poids et une dimension moyenne de 40 à 80 μm, on les comprime et, après élimination des produits auxiliaires organiques de préparation , on les fritte sous une pression d'azote de $1 \leq p \leq 10$ bar.

**4.** Procédé selon la revendication 1, **caractérisé en ce que** la compression est réalisée à une pression < 2 500 bar, l'élimination des produits auxiliaires organiques de préparation et de l'humidité est réalisée à l'air, en atmosphère de gaz protecteur ou sous vide à une température $\leq 650°C$ et le frittage est réalisé à une température $\leq 2000°C$.

**5.** Pièces mécaniques consistant en $Si_3N_4$ fritté selon les revendications 1 ou 2.

**6.** Soupapes ayant une probabilité de rupture inférieure à $10^{-6}$, en $Si_3N_4$ fritté selon les revendications 1 ou 2.

**7.** Procédé selon les revendications 3 ou 4, pour la fabrication de soupapes selon la revendication 6, **caractérisé en ce que** les soupapes sont sélectionnées par analyse oscillatoire par une fenêtre de fréquence du pic de fréquence de résonance $\geq 0,0125$ %.

**8.** Utilisation du $Si_3N_4$ fritté ou de pièces mécaniques en $Si_3N_4$ fritté selon les revendication 1, 2 ou 5 dans la construction de moteurs, la construction de machines, les techniques de conservation et la fabrication d'outils.